# EUROPEAN PATENT SPECIFICATION

(11) **EP 3 103 942 B1**
(45) Date of publication and mention of the grant of the patent: **15.05.2019**
(21) Application number: 14880486.7
(22) Date of filing: 03.12.2014
(51) Int. Cl.: E05B 17/10, B62J 6/00, E05B 17/18, E05B 83/00, B62H 5/02, B62H 5/08

(54) **CYLINDER LOCK DEVICE**
ZYLINDERVERRIEGELUNGSVORRICHTUNG
DISPOSITIF DE SERRURE À BARILLET

(30) Priority: 30.01.2014 JP 2014016072
(43) Date of publication of application: 14.12.2016
(73) Proprietor: Kabushiki Kaisha Honda Lock, Miyazaki-shi, Miyazaki 880-0293 (JP)
(72) Inventor: KUROIWA, Takenobu, Miyazaki-shi Miyazaki 880-0293 (JP)
(74) Representative: Santi, Filippo
(86) International application number: PCT/JP2014/081981
(87) International publication number: WO 2015/114941

(56) References cited:
- EP-A1- 1 169 196
- EP-A2- 2 657 437
- JP-A- H0 932 384
- JP-A- 2003 082 895
- JP-A- 2003 127 952
- JP-A- 2005 194 729
- JP-A- 2007 303 171
- JP-A- 2011 220 021
- JP-A- 2011 220 021
- JP-A- 2012 021 285
- JP-A- 2012 201 256
- JP-A- 2012 201 256
- JP-U- H0 466 271

## Description

### TECHNICAL FIELD

The present invention relates to a cylinder lock device that includes a cylinder lock that has an inner cylinder having a key hole and a cylinder body pivotably housing the inner cylinder, a casing that is connectedly provided on the cylinder body while having a cover plate disposed on an end part on a side opposite to the cylinder body, a shutter plate that is housed in the casing so as to be capable of opening and closing a first opening for mechanical key insertion provided in the cover plate so as to correspond to the key hole, and a magnet lock that has a tubular fitting portion into which a magnet key can be fitted and that is provided on the casing so that an outer end of the tubular fitting portion faces a second opening provided in the cover plate while enabling pivoting of the shutter plate toward an open position side when unlocked.

### BACKGROUND ART

Patent Document JP 2005 194729 A is considered the closest prior art document and discloses the following features of claim 1; a cylinder lock device comprising a cylinder lock that has an inner cylinder having a key hole and a cylinder body pivotably housing the inner cylinder, a casing that is connectedly provided on the cylinder body while having a cover plate disposed on an end part on a side opposite to the cylinder body, a shutter plate that is housed in the casing so as to be capable of opening and closing a first opening for mechanical key insertion provided in the cover plate so as to correspond to the key hole, and a magnet lock that has a tubular fitting portion into which a magnet key can be fitted and that is provided on the casing so that an outer end of the tubular fitting portion faces a second opening provided in the cover plate while enabling pivoting of the shutter plate toward an open position side when unlocked, and an illumination means comprising first and second a light sources, additionally the illumination means comprises a single light guide member that guides light from the light sources which is formed from a transparent synthetic resin, and a cylindrical illumination portion that lights a peripheral edge of the first opening, and the illumination portion is disposed on an outer peripheral part of the first opening of the cover plate. A cylinder lock device in which a first opening for key insertion corresponding to a key hole of a cylinder lock is provided in a cover plate of a casing connectedly provided on a cylinder body, a second opening facing a fitting recess of a magnet lock that, when it is unlocked, allows operation of a shutter plate, housed in the casing so as to open and close the first opening, toward the open position side is provided in the cover plate, and the peripheral edge of the first opening can be illuminated is known from for example Patent Document 1.

### RELATED ART DOCUMENTS

### PATENT DOCUMENTS

Patent Document 1: Japanese Patent Application Laid-open No. 2003-176650

### SUMMARY OF THE INVENTION

### PROBLEMS TO BE SOLVED BY THE INVENTION

However, in the arrangement disclosed in Patent Document 1 above, the peripheral edge of the first opening is illuminated by a remote operation, and the shutter plate is automatically opened, but it is necessary to disengage the magnet lock by fitting a magnet key into the fitting recess of the magnet lock before inserting the mechanical key when carrying out a manual operation, and in this process since the peripheral edge of the second opening provided in the cover plate such that the fitting recess faces it is not lit, it is inconvenient to carry out a manual operation in the dark.

The present invention has been accomplished in light of such circumstances, and it is an object thereof to provide a cylinder lock device that makes unlocking of a magnet lock in a dark easy.

### MEANS FOR SOLVING THE PROBLEMS

In order to attain the above object, according to a first aspect of the present invention, there is provided a cylinder lock device comprising a cylinder lock that has an inner cylinder having a key hole and a cylinder body pivotably housing the inner cylinder, a casing that is connectedly provided on the cylinder body while having a cover plate disposed on an end part on a side opposite to the cylinder body, a shutter plate that is housed in the casing so as to be capable of opening and closing a first opening for mechanical key insertion provided in the cover plate so as to correspond to the key hole, and a magnet lock that has a tubular fitting portion into which a magnet key can be fitted and that is provided on the casing so that an outer end of the tubular fitting portion faces a second opening provided in the cover plate while enabling pivoting of the shutter plate toward an open position side when unlocked, characterized in that illumination means comprising a first illumination portion that can light a peripheral edge of the first opening and a second illumination portion that can light a peripheral edge of the second opening is provided on the casing.

Further, according to a first aspect of the present invention, the illumination means comprises a light source and a single light guide member that guides light from the light source, the first and second illumination portions being formed from part of the light guide member.

Moreover, according to a second aspect of the present invention, in addition to the first aspect, the light source can be switched between being turned on and being turned off by a remote operation of a user.

### EFFECTS OF THE INVENTION

In accordance with the first aspect of the present invention, since the peripheral edge of the first opening for mechanical key insertion is lit by the first illumination portion, and the peripheral edge of the second opening having the outer end of the tubular fitting portion of the magnet lock facing it is lit by the second illumination portion, the operation of unlocking the magnet lock by means of the magnet key in the dark becomes easy, and the operation of inserting the mechanical key into the cylinder lock also becomes easy.

Furthermore, in accordance with the first aspect of the present invention, since the first and second illumination portions are formed from part of the single light guide member, the number of components can be reduced.

Moreover, in accordance with the second aspect, since the light source can be switched between being turned on and being turned off by a remote operation, the operation of inserting the mechanical key after the shutter plate has been operated to the open position by unlocking the magnet lock can be carried out smoothly.

### BRIEF DESCRIPTION OF DRAWINGS

FIG. 1 is a vertical sectional view, along line 1-1 in FIG. 2, of an essential part of a cylinder lock device. (first embodiment)
FIG. 2 is a view in the direction of arrow 2 in Fig. 1. (first embodiment)
FIG. 3 is a vertical sectional view along line 3-3 in FIG. 2. (first embodiment)
FIG. 4 is a view in the direction of arrow 4 in Fig. 2. (first embodiment)
FIG. 5 is an exploded perspective view of a casing. (first embodiment)
FIG. 6 is a side view of a mechanical key and a magnet key. (first embodiment)
FIG. 7 is a front view of a light guide member from the direction of arrow 7 in FIG. 5. (first embodiment)
FIG. 8 is a perspective view of a remote operation device. (first embodiment)

### EXPLANATION OF REFERENCE NUMERALS AND SYMBOLS

11 Cylinder lock
12 Cylinder body
13 Inner cylinder
14 Keyhole
16 Casing
18a Cover plate
19 Magnet lock
20 Shutter plate
25 Magnet key
29 First opening
32a Tubular fitting portion
35 Second opening
47 Illumination means
48, 49 Light source
50 Light guide member
50b First illumination portion
50c Second illumination portion

### MODE FOR CARRYING OUT THE INVENTION

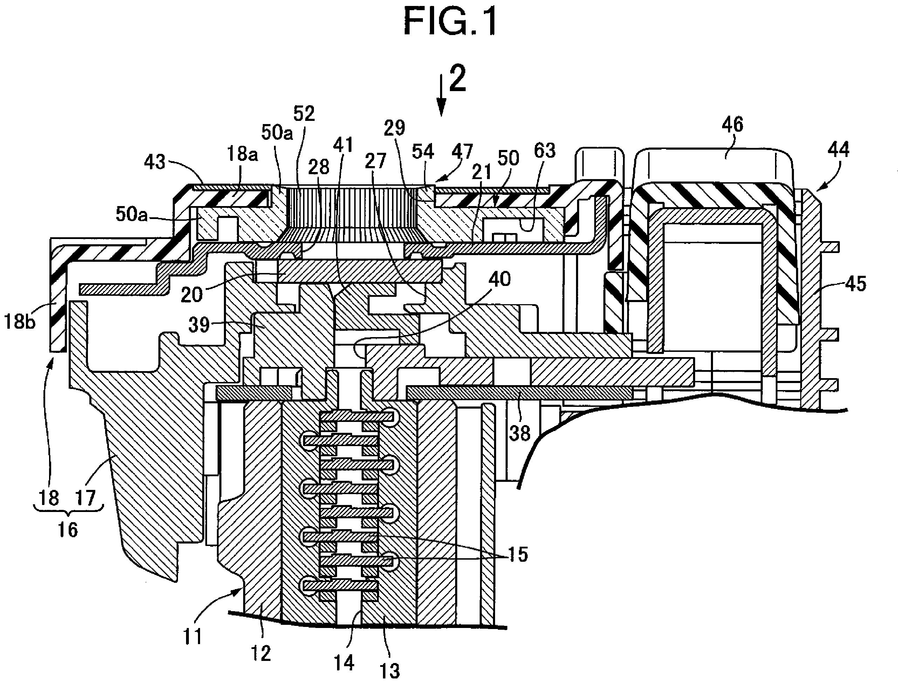

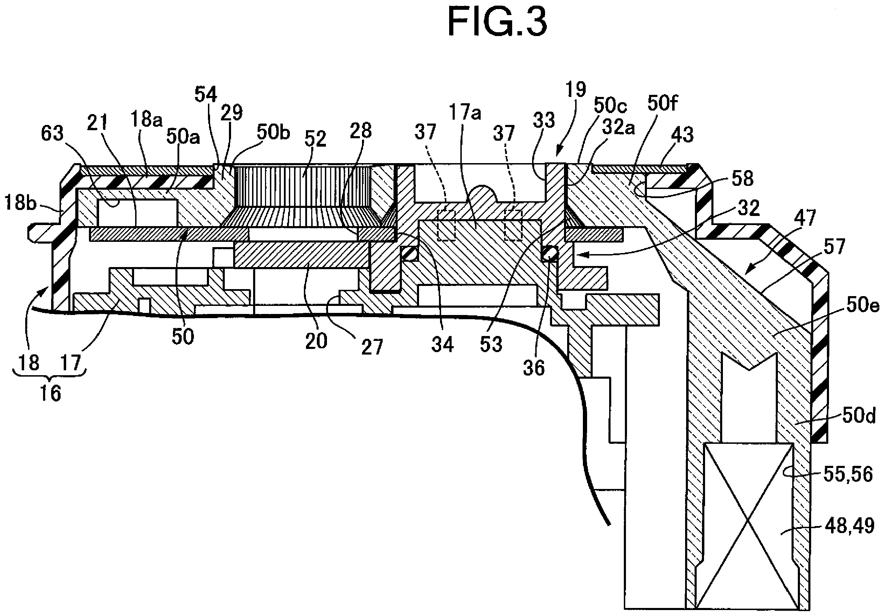

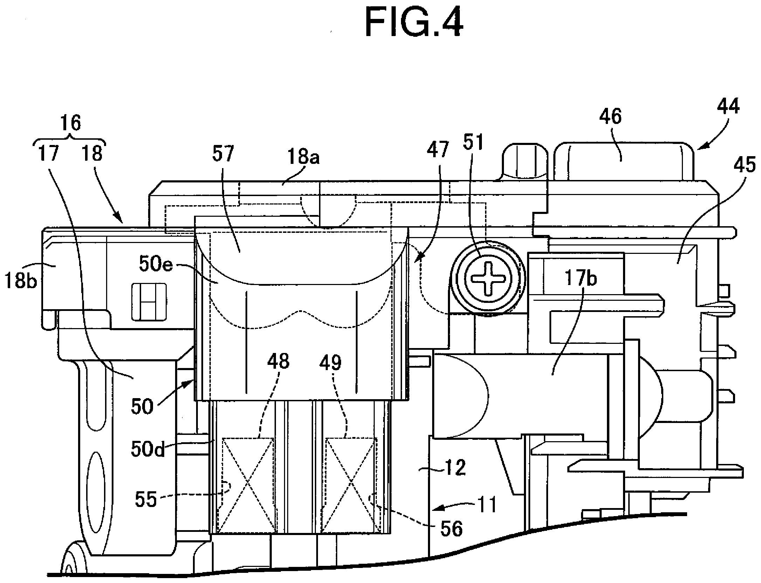

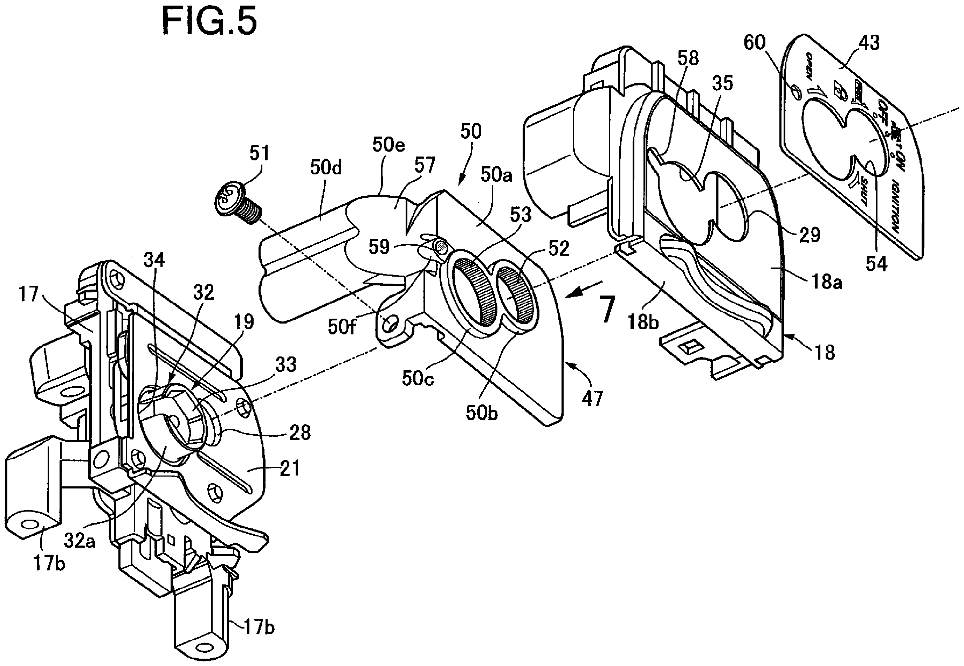

An embodiment of the present invention is explained below by reference to the attached FIG. 1 to FIG. 8.

### FIRST EMBODIMENT

First, in FIG. 1, a cylinder lock device disposed in a vehicle, for example a two-wheeled motor vehicle, includes a cylinder lock 11 that can switch the switching mode of an ignition switch and that can switch between a locked state and an unlocked state of the steering.

This cylinder lock 11 includes a cylinder body 12 that is fixed to a vehicle body frame, an inner cylinder 13 that has a key hole 14 and is pivotably housed in the cylinder body 12, and a plurality of tumblers 15 that are disposed in the inner cylinder 13 so that they can switchably engage with and disengage from the cylinder body 12.

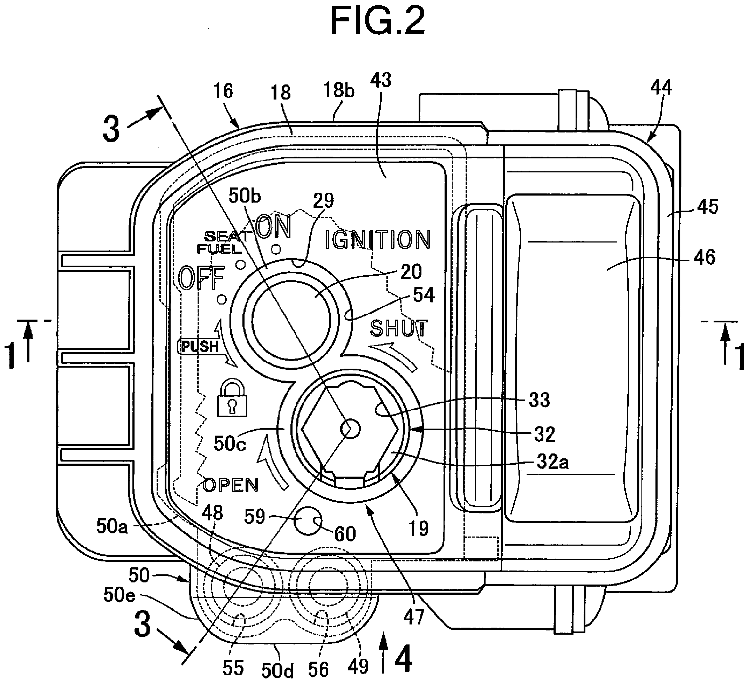

Referring in addition to FIG. 2 to FIG. 5, a casing 16 is provide so as to be connected to one end part of the cylinder body 12 so as to cover the one end part of the cylinder body 12, this casing 16 having a magnet lock 19 disposed therein and having a shutter plate 20 housed therein.

The casing 16 is formed from a case member 17, made of a non-magnetic material, that is secured to the cylinder body 12, and a cover member 18, made of a synthetic resin, that is mounted on the case member 17 so as to cover the case member 17 from the side opposite to the cylinder body 12.

The cover member 18 is formed so as to integrally have a cover plate 18a that is disposed on an end part on the side opposite to the cylinder body 12, and a side wall 18b that is connected to the peripheral edge of the cover plate 18a so as to cover part of the outer periphery of the case member 17 from the outside. Furthermore, housed within the casing 16 is a protector 21 made of metal, this protector 21 being formed into a flat plate shape so as to be disposed between the cover plate 18a of the cover member 18 and the shutter plate 20 and being fixed to the case member 17.

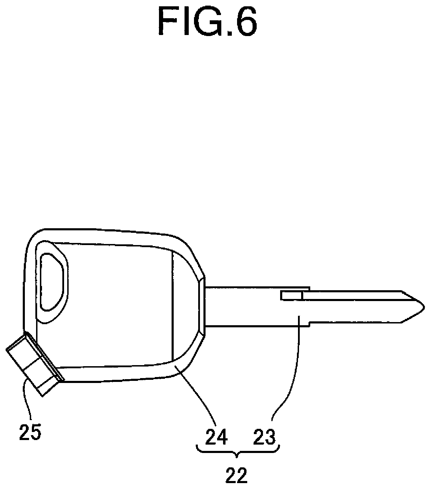

In FIG. 6, the mechanical key 22, which is for carrying out locking/unlocking of the cylinder lock 11, is formed by embedding in a synthetic resin grip part 24 one end part of a key plate 23 that can be inserted into the key hole 14, a magnet key 25 for unlocking the magnet lock 19 being provided integrally with the grip part 24 and the magnet key 25 being formed so as to have an irregular polygonal cross-sectional external shape.

Provided in the case member 17 is a first key insertion hole 27 corresponding to the key hole 14 of the cylinder lock 11, and provided in the protector 21 is a second key insertion hole 28 corresponding to the first key insertion hole 27. Furthermore, provided in the cover plate 18a of the cover member 18 is a circular first opening 29 corresponding to the key hole 14 and the first and second key insertion holes 27 and 28 so that the mechanical key 22 can be inserted thereinto.

The shutter plate 20 is disposed between the protector 21 and the case member 17 within the casing 16 and can slide between a closed position in which it cuts off communication between the first and second key insertion holes 27 and 28 so as to make it impossible for the mechanical key 22 to be inserted into the key hole 14 and an open position in which the first and second key insertion holes 27 and 28 are opened so as to enable the mechanical key 22 to be inserted into the key hole 14.

Sliding of this shutter plate 20 is permitted by unlocking the magnet lock 19 disposed in the casing 16 by means of the magnet key 25, this magnet lock 19 including a rotor 32 that is pivotably supported on the case member 17 of the casing 16 and operatively linked to the shutter plate 20. This rotor 32 is basically formed into a cylindrical shape, a tubular fitting portion 32a that has a cutout in part of the peripheral direction so as to form an irregular polygonal fitting recess 33 into which the magnet key 25 is fitted is provided integrally with the rotor 32, and a through hole 34 through which the tubular fitting portion 32a extends is provided in the protector 21.

A circular cross-section supporting projecting portion 17a projecting on the cover plate 18a side is projectingly provided integrally with the case member 17 of the casing 16. A circular second opening 35 is provided in a portion, corresponding to this supporting projecting portion 17a, of the cover plate 18a of the cover member 18, and the first opening 29 and the second opening 35 are formed in a mutually connected manner so as to form a figure of '8'.

The rotor 32 is formed into a substantially cylindrical shape from a non-magnetic material and is pivotably supported via the supporting projecting portion 17a; an O ring 36 is disposed between a base part of the supporting projecting portion 17a and the rotor 32, and the outer end of the tubular fitting portion 32a, which is integral with the rotor 32, is disposed so as to face the second opening 35.

A plurality of pins 37, which are formed from magnets, are slidably fitted into the extremity of the supporting projecting portion 17a so as to be capable of moving between a position where they engage with the rotor 32 and a position where the engagement is released, each pin 37 being resiliently urged toward the side where it engages with the rotor 32.

In such a magnet lock 19, fitting a legitimate magnet key 25 into the fitting recess 33 of the rotor 32 enables the pin 37 to move, against the resilient urging force acting on the pin 37, toward the side where engagement with the rotor 32 is released, thereby allowing the rotor 32 to pivot.

Pivoting the magnet key 25 fitted into the fitting recess 33 pivots the rotor 32 and moves the shutter plate 20 operatively linked to the rotor 32 from the closed position to the open position.

A back face support plate 38 is fixed to a face of the case member 17 of the casing 16 on the cylinder body 12 side, a cam member 39 relatively non-pivotably linked to the inner cylinder 13 is housed between the back face support plate 38 and the case member 17, and a third key insertion hole 40 corresponding to the key hole 14 is provided in the cam member 39.

Slidably supported on the cam member 39 is a lid member 41 that can move between an open position where the third key insertion hole 40 is opened and a closed position where the third key insertion hole 40 is closed, the lid member 41 being spring-biased toward the closed position side.

Furthermore, a design sheet 43 is affixed to an outer face of the cover plate 18a of the cover member 18, the design sheet 43 displaying the operating positions for the mechanical key 22 inserted into the key hole 14, the direction for the magnet key 25 to be operated in the magnet lock 19, etc.

Moreover, disposed on one side of the casing 16 is an opening/closing body remote operation part 44 that can release a locked state of an opening/closing body disposed at a position away from the cylinder lock 11, for example, a riding seat that can be opened and closed. This opening/closing body remote operation part 44 includes a support case 45 that is secured to a pair of mounting arm portions 17b and 17b provided on the case member 17 and an operation element 46 that is pivotably supported on the support case 45 so as to have one part projecting outward from the support case 45.

Provided on the casing 16 is illumination means 47, the illumination means 47 including a first illumination portion 50b that can light the peripheral edge of the first opening 29 and a second illumination portion 50c that can light the peripheral edge of the second opening 35.

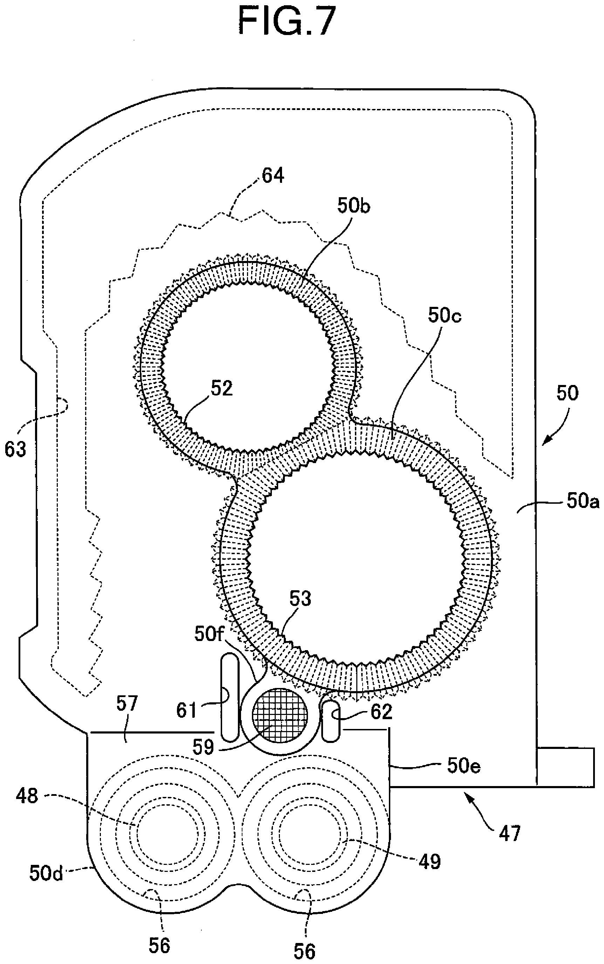

Referring in addition to FIG. 7, the illumination means 47 includes first and second light sources 48 and 49 and a single light guide member 50 that guides light from the light sources 48 and 49, the first and the second illumination portions 50b and 50c being formed from part of the light guide member 50.

The light guide member 50 is formed from a transparent synthetic resin so as to integrally have a flat plate portion 50a that is disposed in a back part of the cover plate 18a of the casing 16 so as to be sandwiched between the protector 21 and the cover plate 18a, the cylindrical first illumination portion 50b, which is provided integrally with the flat plate portion 50a so as to be disposed on an outer peripheral part of the first opening 29 of the cover plate 18a, the cylindrical second illumination portion 50c, which is provided integrally with the flat plate portion 50a so as to be disposed on an outer peripheral part of the second opening 35 of the cover plate 18a, a light source arrangement portion 50d that is disposed to one side of the casing 16 along the longitudinal direction of the cylinder body 12, and a linking portion 50e that links the light source arrangement portion 50d and the flat plate portion 50a, and is mounted on the case member 17 of the casing 16 by means of a screw member 51.

The first and second illumination portions 50b and 50c are formed so as to form a figure of '8', and first and second concave-convex parts 52 and 53 for diffusing light are formed along the entire periphery on the inner periphery and an inner face, on the protector 21 side, of the first and second illumination portions 50b and 50c. A figure of '8' -shaped first through hole 54 through which the first and second illumination portions 50b and 50c face the exterior is provided in the design sheet 43, which is affixed to the cover plate 18a.

Furthermore, provided side by side in the light source arrangement portion 50d are a bottomed first housing hole 55 fixedly housing the first light source 48 such as an LED that emits blue light and a bottomed second housing hole 56 fixedly housing the second light source 49 such as an LED that emits red light. The linking portion 50e is formed so as to have an inclined reflecting face 57 that guides light from the first and second light sources 48 and 49 toward the flat plate portion 50a side.

Moreover, projectingly provided integrally with an end part of the flat plate portion 50a on the side where the linking portion 50e is connectedly provided is an extending portion 50f that is disposed, among the first and second light sources 48 and 49, close to the second light source 49, the extending portion 50f extending sideways while being connected to the second illumination portion 50c. On the other hand, provided in the cover plate 18a of the cover member 18 is a third opening 58 communicating with the second opening 35 so that the extending portion 50f can be disposed therein, formed at the extremity of the extending portion 50f is a circular third concave-convex part 59 so as to diffuse light, and provided in the design sheet 43 is a circular second through hole 60 through which the third concave-convex part 59 faces the exterior.

Formed in the flat plate portion 50a are a first slit 61 for suppressing the direct guidance of blue light from the first light source 48 toward the extending portion 50f side and a second slit 62 sandwiching the extending portion 50f between itself and the first slit 61. The second slit 62 is formed shorter than the first slit 61 so as to allow light from the second light source 49 to be guided toward the third concave-convex part 59 at the extremity of the extending portion 50f.

Furthermore, provided in a face, on the protector 21 side, of the flat plate portion 50a of the light guide member 50 is a recess 63 surrounding the first and second illumination portions 50b and 50c from the side opposite to the light source arrangement portion 50d, and formed on a portion, on the first and second illumination portions 50b and 50c side, of the inner periphery of the recess 63 is a fourth concave-convex part 64 for diffusing light.

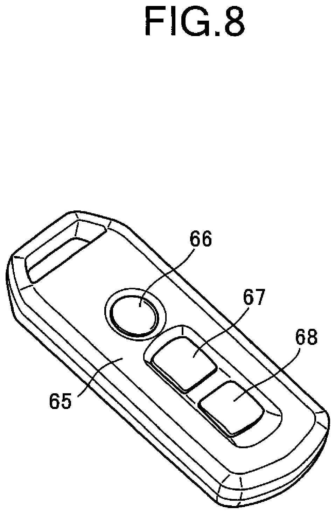

The first and second light sources 48 and 49 can be switched between being turned on and being turned off by a remote operation using a radio signal from a remote operation device 65 shown in FIG. 8. Disposed on the remote operation device 65 are an answer-back button 66 for pushing when looking for a subject vehicle parked in a car park, a security set button 67 for attaining a security set state in which an unauthorized operation carried out on a subject vehicle is detected and an alarm such as a buzzer is operated, and a security unset button 68 for canceling the security set state.

When the answer-back button 66 is pushed, in response to a radio signal from the remote operation device 65 being received by the vehicle side not only does a direction indicator flash and a buzzer sound, but the first light source 48 also turns on, blue light is guided to the first and second illumination portions 50b and 50c to thus light the peripheral edge of the first opening 29 for mechanical key insertion blue by means of the first illumination portion 50b and to thus light the peripheral edge of the second opening 35, which the outer end of the tubular fitting portion 32a of the magnet lock 19 faces, blue by means of the second illumination portion 50c, and the third concave-convex part 59 also shines blue.

Such an ON state of the first light source 48 continues until a predetermined period of time, for example 3 minutes, has elapsed or the mechanical key 22 inserted into the key hole 14 of the cylinder lock 11 is pivoted, and after that the first light source 48 turns off.

When the security set button 67 is pushed, in response to a radio signal from the remote operation device 65 being received on the vehicle side not only does security start, but the second light source 49 also flashes. In this process, as well as the first and second illumination portions 50b and 50c, the third concave-convex part 59 also flashes with a red color, and a theft prevention effect can be enhanced by making the third concave-convex part 59, to which a larger amount of light is guided from the second light source 49, shine more strongly than the first and second illumination portions 50b and 50c do. In this security set state, vibration acting on the two-wheeled motor vehicle is detected and an alarm operation state is attained, and for example a buzzer sounds.

Such a flashing state of the second light source 49 is ended by pushing the security unset button 68 for canceling the security or pivoting the mechanical key 22 inserted into the key hole 14 of the cylinder lock 11, and the second light source 49 turns off.

The operation of this embodiment is now explained; since the first opening 29 for mechanical key insertion provided in the cover plate 18a so as to correspond to the key hole 14 of the cylinder lock 11 is provided in the cover plate 18a of the casing 16 connectedly provided on the cylinder body 12 of the cylinder lock 11, the second opening 35 having the outer end of the tubular fitting portion 32a of the magnet lock 19 facing it is provided in the cover plate 18a, the peripheral edge of the first opening 29 is lit by the first illumination portion 50b, and the peripheral edge of the second opening 35 is lit by the second illumination portion 50c, the operation of unlocking the magnet lock 19 by means of the magnet key 25 in the dark becomes easy, and the operation of inserting the mechanical key 22 into the cylinder lock 11 also becomes easy.

Furthermore, since the illumination means 47, which includes the first and second illumination portions 50b and 50c, includes the first and second light sources 48 and 49 and the single light guide member 50 that guides light from the light sources 48 and 49, and the first and second illumination portions 50b and 50c are formed from part of the light guide member 50, the number of components can be reduced.

Moreover, since the first and second light sources 48 and 49 can be switched between being turned on and being turned off by a remote operation of a user, the operation of inserting the mechanical key 22 after the shutter plate 20 has been operated to the open position by unlocking the magnet lock 19 can be carried out smoothly.

## Claims

1. A cylinder lock device comprising a cylinder lock (11) that has an inner cylinder (13) having a key hole (14) and a cylinder body (12) pivotably housing the inner cylinder (13), a casing (16) that is connectedly provided on the cylinder body (12) while having a cover plate (18a) disposed on an end part on a side opposite to the cylinder body (12), a shutter plate (20) that is housed in the casing (16) so as to be capable of opening and closing a first opening (29) for mechanical key insertion provided in the cover plate (18a) so as to correspond to the key hole (14), and a magnet lock (19) that has a tubular fitting portion (32a) into which a magnet key (25) can be fitted and that is provided on the casing (16) so that an outer end of the tubular fitting portion (32a) faces a second opening (35) provided in the cover plate (18a) while enabling pivoting of the shutter plate (20) toward an open position side when unlocked, and an illumination means (47) comprising first and second light sources (48, 49), additionally the illumination means (47) comprises a single light guide member 50 that guides light from the light sources (48, 49) which is formed from a transparent synthetic resin so as to integrally have a flat plate portion (50a) that is disposed in a back part of the cover plate (18a) of the casing (16) so as to be sandwiched between a protector (21) and the cover plate (18a), and a cylindrical first illumination portion (50b) that lights a peripheral edge of the first opening (29), and the first illumination portion (50b) is provided integrally with the flat plate portion (50a) so as to be disposed on an outer peripheral part of the first opening (29) of the cover plate (18a), and a cylindrical second illumination portion (50c) that lights a peripheral edge of the second opening (35), and the second illumination portion (50c) is provided integrally with the flat plate portion (50a) so as to be disposed on an outer peripheral part of the second opening (35) of the cover plate (18a), a light source arrangement portion (50d) that is disposed to one side of the casing (16) along the longitudinal direction of the cylinder body (12), and a linking portion (50e) that links the light source arrangement portion (50d) and the flat plate portion (50a), and is mounted on a case member (17) of the casing (16) by means of a screw member (51).

2. The cylinder lock device according to claim 1, wherein the light sources (48, 49) can be switched between being turned on and being turned off by a remote operation of a user.

## Patentansprüche

1. Zylinderschlossvorrichtung umfassend ein Zylinderschloss (11), das einen Innenzylinder (13), der ein Schlüsselloch (14) aufweist, und einen Zylinderkörper (12) aufweist, der den Innenzylinder (13) schwenkbar aufnimmt, ein Gehäuse (16), das am Zylinderkörper (12) verbunden vorgesehen ist, während eine Abdeckplatte (18a) an einem Endteil auf einer dem Zylinderkörper (12) gegenüberliegenden Seite angeordnet ist, eine Verschlussplatte (20), die in dem Gehäuse (16) so untergebracht ist, dass sie eine erste Öffnung (29) zum mechanischen Einführen des Schlüssels öffnen und schließen kann, die in der Abdeckplatte (18a) vorgesehen ist, um dem Schlüsselloch (14) zu entsprechen, und ein Magnetschloss (19), das einen rohrförmigen Einsatzabschnitt (32a) aufweist, in den ein Magnetschlüssel (25) eingesetzt werden kann, und das am Gehäuse (16) so vorgesehen ist, dass ein äußeres Ende des rohrförmigen Einsatzabschnitts (32a) einer zweiten Öffnung (35) zugewandt ist, die in der Abdeckplatte (18a) vorgesehen ist, während es das Schwenken der Abdeckplatte (20) in Richtung einer offenen Positionsseite ermöglicht, wenn sie entriegelt ist, und eine Beleuchtungseinrichtung (47), die erste und zweite Lichtquellen (48, 49) umfasst, wobei die Beleuchtungseinrichtung (47) zusätzlich ein einzelnes Lichtleiterelement 50 umfasst, das Licht von den Lichtquellen (48, 49) leitet, das aus einem transparenten Kunstharz gebildet ist, so dass es einstückig einen flachen Plattenabschnitt (50a) aufweist, der in einem hinteren Teil der Abdeckplatte (18a) des Gehäuses (16) so angeordnet ist, dass er zwischen einer Schutzeinrichtung (21) und der Abdeckplatte (18a) sandwichartig angeordnet ist, und einen zylindrischen ersten Beleuchtungsabschnitt (50b), der eine Umfangskante der ersten Öffnung (29) beleuchtet, und wobei der erste Beleuchtungsabschnitt (50b) einstückig mit dem flachen Plattenabschnitt (50a) vorgesehen ist, um an einem äußeren Umfangsteil der ersten Öffnung (29) der Abdeckplatte (18a) angeordnet zu sein, und einen zylindrischen zweiten Beleuchtungsabschnitt (50c), der eine Umfangskante der zweiten Öffnung (35) beleuchtet, und wobei der zweite Beleuchtungsabschnitt (50c) einstückig mit dem flachen Plattenabschnitt (50a) vorgesehen ist, um an einem äußeren Umfangsteil der zweiten Öffnung (35) der Abdeckplatte (18a) angeordnet zu sein, einen Lichtquellenanordnungsabschnitt (50d), der an einer Seite des Gehäuses (16) entlang der Längsrichtung des Zylinderkörpers (12) angeordnet ist, und einen Verbindungsabschnitt (50e), der den Lichtquellenanordnungsabschnitt (50d) und den flachen Plattenabschnitt (50a) verbindet und mittels eines Schraubelements (51) an einem Gehäuseelement (17) des Gehäuses (16) befestigt ist.

2. Zylinderschlossvorrichtung nach Anspruch 1, wobei die Lichtquellen (48, 49) durch eine Fernbedienung eines Benutzers zwischen ein- und ausgeschaltet umschaltbar sind.

## Revendications

1. Dispositif de serrure à barillet comprenant une serrure à barillet (11) qui comporte un barillet intérieur (13) ayant un trou de clé (14) et un corps de barillet (12) logeant de manière pivotante le barillet intérieur (13), un boîtier (16) qui est prévu de manière reliée sur le corps de barillet (12) tout en ayant une plaque de couverture (18a) disposée sur une partie d'extrémité sur un côté opposé au corps de barillet (12), une plaque d'obturation (20) qui est logée dans le boîtier (16) de façon à être capable d'ouvrir et de fermer une première ouverture (29) pour l'introduction de clé mécanique prévue dans la plaque de couverture (18a) de façon à correspondre au trou de clé (14), et une serrure magnétique (19) qui comporte une portion d'insertion tubulaire (32a) dans laquelle une clé magnétique (25) peut être insérée et qui est prévue sur le boîtier (16) de sorte qu'une extrémité extérieure de la portion d'insertion tubulaire (32a) fait face à une seconde ouverture (35) prévue dans la plaque de couverture (18a) tout en permettant le pivotement de la plaque d'obturation (20) vers un côté position ouverte lorsqu'elle est déverrouillée, et un moyen d'éclairage (47) comprenant des première et seconde sources de lumière (48, 49), de plus le moyen d'éclairage (47) comprend un unique élément de guidage de lumière (50) qui guide la lumière provenant des sources de lumière (48, 49) qui est formé à partir d'une résine synthétique transparente de façon à avoir d'un seul tenant une portion plaque plate (50a) qui est disposée dans une partie arrière de la plaque de couverture (18a) du boîtier (16) de façon à être prise en sandwich entre un protecteur (21) et la plaque de couverture (18a), et une première portion d'éclairage cylindrique (50b) qui éclaire un bord périphérique de la première ouverture (29), et la première portion d'éclairage (50b) est prévue d'un seul tenant avec la portion plaque plate (50a) de façon à être disposée sur une partie périphérique extérieure de la première ouverture (29) de la plaque de couverture (18a), et une seconde portion d'éclairage cylindrique (50c) qui éclaire un bord périphérique de la seconde ouverture (35), et la seconde portion d'éclairage (50c) est prévue d'un seul tenant avec la portion plaque plate (50a) de façon à être disposée sur une partie périphérique extérieure de la seconde ouverture (35) de la plaque de couverture (18a), une portion d'agencement de source de lumière (50d) qui est disposée sur un côté du boîtier (16) le long de la direction longitudinale du corps de barillet (12), et une portion de liaison (50e) qui lie la portion d'agencement de source de lumière (50d) et la portion plaque plate (50a), et est montée sur un élément de boîte (17) du boîtier (16) au moyen d'un élément vis (51).

2. Dispositif de serrure à barillet selon la revendication 1, dans lequel les sources de lumière (48, 49) peuvent alterner entre être allumées et être éteintes par une opération à distance d'un utilisateur.
